# EUROPÄISCHE PATENTANMELDUNG

(11) **EP 1 632 160 A1**
(43) Veröffentlichungstag der Anmeldung: **08.03.2006**
(21) Anmeldenummer: 05016472.2
(22) Anmeldetag: 29.07.2005
(51) Int. Cl.: A47J 45/06

(54) **Vorrichtung zum Erfassen der Temperatur an Gefässen zum Kochen von Speisen**

(30) Priorität: 01.09.2004 IT MI20041684
(71) Anmelder: BALLARINI PAOLO & FIGLI S.p.A., 46017 Rivarolo Mantovano (MN) (IT)
(72) Erfinder: Ferron, Francesco, 26041 Casalmaggione (Cremona) (IT)
(74) Vertreter: Mayer, Hans Benno

(57) **Zusammenfassung**

Vorrichtung zum Erfassen der Temperatur an Gefäßen zum Kochen von Speisen, wobei die Flammschutzvorrichtung (2) eine Durchgangsbohrung (4) aufweist und zwischen der Innenwand der Flammschutzvorrichtung (2) und einem Stiel (3) des Kochgefäßes eine Plakette (5) angeordnet ist, die eine Beschichtung (6), bestehend aus einem thermochromatischen Lack, aufweist und diese Beschichtung (6) über die Durchgangsbohrung (4) eingesehen werden kann.

## Beschreibung

Die vorstehende Erfindung betrifft eine Vorrichtung zum Erfassen der Temperatur an Gefäßen, die zum Kochen von Speisen geeignet sind.

Es ist aus dem Stand der Technik bekannt geworden, im Inneren eines Behälters, der zum Kochen von Speisen dient, z.B. an der Innenseite des Behälterbodens einer Pfanne, eine Fläche vorzusehen, die mit einem thermochromatischen Lack beschichtet ist, um eine vom Kochgefäß erreichte Temperatur anzuzeigen.

Die bekannte Einrichtung ist nur dann funktionsfähig, wenn der innenliegende Boden des Behälters von einem transparenten Erzeugnis abgedeckt ist, z.B. Öl oder Wasser. Bei der Zubereitung von Speisen, wie z.B. Soßen, Gemüse oder ähnlichen Gerichten, wird der Boden des Behälters aber von nicht transparenten Speisen abgedeckt und somit kann die vom Kochgefäß erreichte Temperatur nicht abgelesen werden.

In einer weiteren bekannten Ausführungsform wurde vorgeschlagen, direkt an der Außenseite des Gefäßes eine Beschichtung (bestehend aus thermochromatischem Lack) anzubringen, z.B. an der Flammschutzvorrichtung, die vorgesehen ist, den Stiel einer Pfanne aufzunehmen.

Auch kann die thermochromatische Lackierung am Stiel eines Kochgefäßes angebracht werden, sofern dieses z.B. aus Stahlblech besteht.

Die bekannten Vorschläge, die thermochromatische Lackbeschichtung in der beschriebenen Weise anzubringen, bringt den Nachteil mit sich, dass ein besonderer Arbeitsschritt zum Aufbringen der Speziallackierung an den einzelnen Kochgefäßen einzuplanen ist und das Aufbringen der Speziallackierung von Hand erfolgen muss oder über verhältnismäßig aufwändige Verfahren, z.B. durch Puffern, durch Übertragen von Abziehbildern oder durch ein Spritzverfahren.

All diese Lackierverfahren sind arbeitsaufwändig, müssen von Hand ausgeführt werden und ermöglichen es nicht, konstante Qualitätsmerkmale einzuhalten.

Es ist daher Aufgabe der vorstehenden Erfindung, ein neues Arbeitsverfahren vorzuschlagen, das geeignet ist, Gefäße zum Kochen von Speisen mit Vorrichtungen auszurüsten, die mit einer thermochromatischen Lackierung zum Anzeigen der vom Gefäß erreichten Temperatur versehen sind, wobei die dem Stand der Technik angehörenden Nachteile, wie eingangs beschrieben, vermieden werden.

Diese Aufgabe wird mit einer Vorrichtung zum Erfassen der Temperatur an Kochgefäßen für die Zubereitung von Speisen dadurch erreicht, dass die Flammschutzvorrichtung eine Durchgangsbohrung aufweist und zwischen der Innenwand der Flammschutzvorrichtung und dem Stiel des Kochgefäßes eine Platte angeordnet ist, die mit einer Beschichtung aus thermochromatischem Lack versehen ist, und diese Beschichtung durch die Durchgangsbohrung einsehbar ist.

Der Erfindungsgegenstand wird nun genauer beschrieben und anhand eines Ausführungsbeispieles in den beigefügten Zeichnungen dargestellt:
Figur 1 zeigt eine Flammschutzvorrichtung einer Pfanne mit einer Einrichtung, die mit einer thermochromatischen Beschichtung zum Anzeigen der erreichten Betriebstemperatur versehen ist.
Figur 2 zeigt in Draufsicht die Flammschutzvorrichtung mit der erfindungsgemäßen Einrichtung.
Figur 3 zeigt die Flammschutzvorrichtung im Schnitt, entlang der Linie III-III der Figur 2.
Figur 4 zeigt in einer Draufsicht ein streifenartiges Gebilde mit einer Anzahl von ausgestanzten Platten, die mit einer thermochromatischen Beschichtung versehen sind und an dem Kochgefäß anbringbar sind.

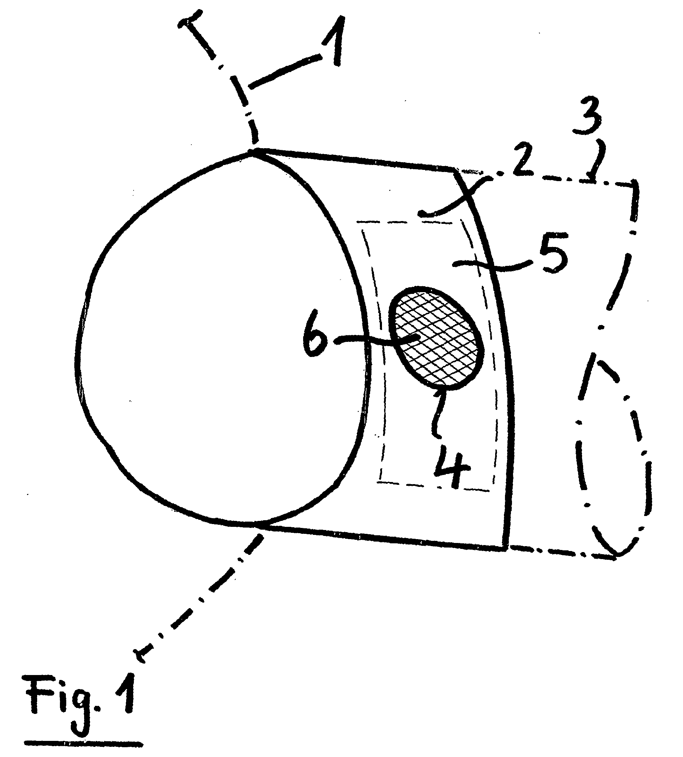

Wie der Figur 1 zu entnehmen ist, ist eine Pfanne 1, die schematisch durch Strichpunktlinien angedeutet ist, mit einer üblichen Flammschutzvorrichtung 2 verbunden, in welche in bekannter Weise ein Stiel 3 eingesetzt wird.

Die Flammschutzvorrichtung 2 weist an einer durch den Benutzer einsehbaren Stelle eine Durchgangsbohrung 4 auf.

Zwischen dem Stiel 3 und der Innenseite der Flammschutzvorrichtung 2 ist eine Platte 5 eingesetzt, die im Detail noch im Folgenden genauer beschrieben werden wird.

Die Platte 5 weist eine Beschichtung auf, die unter Verwendung eines thermochromatischen Lackes 6 erstellt wurde und über die Bohrung 4, die in die Flammschutzvorrichtung 2 eingebracht ist, einsehbar ist.

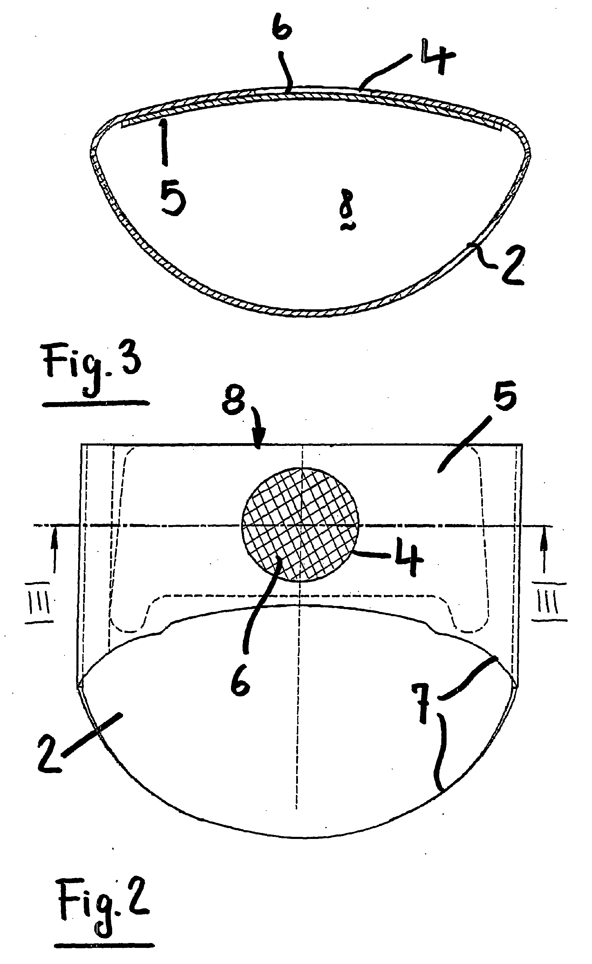

Der Figur 2 kann die Flammschutzvorrichtung 2 in einer Draufsicht entnommen werden.

Die Vorderseite 7 der Flammschutzvorrichtung 2 ist fest mit dem Körper des Kochgefäßes (nicht dargestellt) verbunden. Die rückwärtige Seite der Flammschutzvorrichtung 2 weist eine Öffnung 8 auf, in die ein Stiel (nicht dargestellt in Figur 2) eingesetzt werden kann.

Der Zeichnung kann auch die Platte 5 entnommen werden, die in vorteilhafter Weise aus Metall besteht und mit einer thermochromatischen Lackierung 6 versehen ist, welche deutlich durch die Bohrung 4 erkennbar ist.

In Abhängigkeit von dem verwendeten Kochgefäß können die Platten 5 mit einer Beschichtung 6 versehen werden, welche unterschiedliche thermochromatische Sensibilität aufweisen.

In Figur 3 ist die Flammschutzvorrichtung im Schnitt entlang der Linie III-III der Figur 2 dargestellt.

Es kann deutlich die Öffnung 8, die zur Aufnahme eines nicht dargestellten Stieles 3 dient, erkannt werden. Ferner ist die Platte 5 zu erkennen, die mit einer thermochromatischen Beschichtung 6 versehen und durch den Benutzer des Kochgefäßes über die Bohrung 4, welche an der Oberseite der Wand der Flammschutzvorrichtung 2 angeordnet ist, eingesehen werden kann.

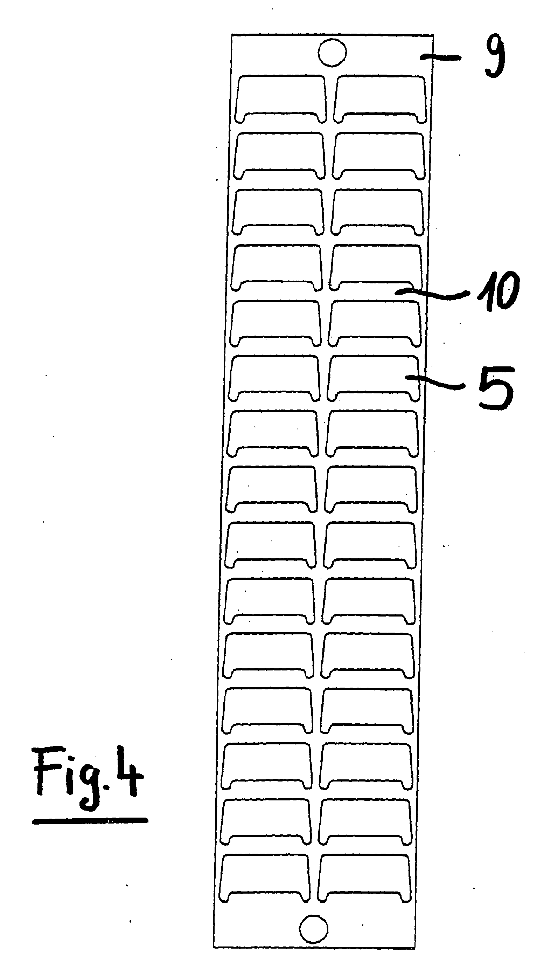

In Figur 4 ist ein streifenartiges Gebilde dargestellt, das aus Metallblech besteht und in der Gesamtheit mit 9 gekennzeichnet ist.

Die Oberfläche des streifenartigen Gebildes 9 ist in der Gesamtheit mit einer thermochromatischen Beschichtung 10 abgedeckt.

In vorteilhafter Weise wird der Metallstreifen 9 chemisch vorbehandelt, z.B. über ein galvanisches Passivierungsverfahren oder über ein mechanisches Verfahren, wie z.B. Sandstrahlen oder Bürsten.

Im Anschluss daran wird die thermochromatische Lackierung aufgetragen und diese Lackierung kann über einen oder mehrere Beschichtungsvorgänge durchgeführt werden, z.B. über ein Tauchverfahren, über ein Siebdruckverfahren oder ein Spritzverfahren.

Nach Durchführung dieser Behandlungsschritte wird in vorteilhafter Weise eine transparente Beschichtung aufgetragen, die den thermochromatischen Lack auf der Platte 5 abdeckt, versiegelt und somit schützt vor unerwünschter Beeinflussung durch Flüssigkeit, die z.B. während des Kochvorganges aus dem Behälter austritt, oder Korrosionserscheinungen, die sich z.B. beim Waschen des Gefäßes in einer Geschirrspülmaschine einstellen können.

Es hat sich ferner als vorteilhaft erwiesen, nach den vorgenannten Beschichtungs- und Lackierverfahren, die einzelnen Platten 5 des Streifens vorzustanzen, um somit einen bequemen Zugriff während der Montagephase des Kochgefäßes zu ermöglichen.

## Patentansprüche

1. Vorrichtung zum Anzeigen der Temperatur von Kochgefäßen für Speisen, **dadurch gekennzeichnet, dass** die Flammschutzvorrichtung (2) eine durchgehende Bohrung (4) aufweist und dass zwischen der inneren Wand der Flammschutzvorrichtung (2) und dem Stiel (3) des Kochgefäßes eine Platte (5) angeordnet ist, die mit einer thermochromatischen Beschichtung (6) versehen ist, und diese Beschichtung (6) durch die durchgehende Bohrung (4) einsehbar ist.

2. Vorrichtung, nach Patentanspruch 1, **dadurch gekennzeichnet, dass** die mit einer Beschichtung aus thermochromatischer Lackierung versehene Platte (5) aus Metallblech besteht.

3. Vorrichtung, nach Patentanspruch 1, **dadurch gekennzeichnet, dass** die Platte (5) eine Beschichtung (6) aufweist, die unterschiedliche thermographische Sensibilität aufweist.

4. Vorrichtung nach Patentanspruch 1, **dadurch gekennzeichnet, dass** das Blech (9) zur Schaffung der mit einer thermographischen Beschichtung versehenen Platte (5) chemisch vorbehandelt wird unter Durchführung eines galvanischen Passivierungsverfahrens, mittels mechanischer Sandstrahlung oder mittels Bürsten, und dass im Anschluss daran die Beschichtung (6) aus thermochromatischer Lackierung ein- oder mehrschichtig über ein Tauchverfahren oder ein Siebdruckverfahren oder ein Spritzverfahren aufgebracht wird.

5. Vorrichtung, nach Patentanspruch 4, **dadurch gekennzeichnet, dass** die Beschichtung (6) mit thermochromatischer Lackierung mittels einer transparenten Schutzschicht abgedeckt wir.

6. Vorrichtung, nach Patentanspruch 1, **dadurch gekennzeichnet, dass** die einzelnen Platten (5), welche die thermochromatische Beschichtung (6) aufweisen, vorgestanzt sind, um eine bequeme Verfügbarkeit der einzelnen Platten (5) (Figur 4) zu ermöglichen.

7. Gefäß zum Kochen von Speisen, **dadurch gekennzeichnet, dass** das Gefäß mit einer Vorrichtung (5) ausgerüstet ist, welches die Merkmale nach Anspruch 1-6 aufweist.
